# EUROPÄISCHE PATENTSCHRIFT

(11) **EP 2 694 590 B1**
(45) Veröffentlichungstag und Bekanntmachung des Hinweises auf die Patenterteilung: **16.07.2014**
(21) Anmeldenummer: 12713120.9
(22) Anmeldetag: 30.03.2012
(51) Int. Cl.: C08L 83/06

(54) **WÄSSRIGE DISPERSIONEN VON ORGANOSILICIUMVERBINDUNGEN**
AQUEOUS DISPERSIONS OF ORGANOSILICON COMPOUNDS
DISPERSIONS AQUEUSES DE COMPOSÉS D'ORGANOSILICIUM

(30) Priorität: 07.04.2011 DE 102011007006
(43) Veröffentlichungstag der Anmeldung: 12.02.2014
(73) Patentinhaber: Wacker Chemie AG, 81737 München (DE)
(72) Erfinder: RAUTSCHEK, Holger, 01612 Nünchritz (DE); ACKERMANN, Hartmut, 84489 Burghausen (DE); SCHRÖCK, Robert, 84503 Altötting (DE)
(74) Vertreter: Budczinski, Angelika
(86) Internationale Anmeldenummer: PCT/EP2012/055819
(87) Internationale Veröffentlichungsnummer: WO 2012/136589

(56) Entgegenhaltungen:
- EP-A1- 1 034 209
- EP-B1- 0 582 611
- WO-A1-2004/109008

## Beschreibung

Die Erfindung betrifft wässrige Dispersionen von Organosiliciumverbindungen, Verfahren zu deren Herstellung sowie deren Verwendung, insbesondere zur hydrophierenden Imprägnierung und Massehydrophobierung von mineralischen und organischen Baustoffen.

Silane und Siloxane werden seit langem für den Bautenschutz eingesetzt, z.B. Lösungen von Silanen in organischen Lösungsmitteln wie sie z.B. in DE-A 1069057 beschrieben sind. Aus Kostengründen aber nicht zuletzt auch wegen der gesundheitlichen Gefahren beim Umgang mit organischem Lösungsmittel und der damit verbundenen Umweltbelastung ist das Arbeiten mit organischen Lösungsmitteln nachteilig.

Wässrige Formulierungen auf der Basis von Alkylalkoxysilanen und -siloxanen sind bekannt. EP-A 234 024 beschreibt Silanemulsionen mit nichtionischen Emulgatoren, die einen HLB-Wert von 4 bis 15 aufweisen. EP-B 392 253 beschreibt wässrige Formulierungen die Gemische aus Alkoxysilan und Alkoxysiloxanen enthalten. Durch den Zusatz von hydrophoben Füllstoffen, wie hydrophober Kieselsäure kann der Abperleffekt dieser Formulierungen verbessert werden. Allerdings wird keine Aussage zur Stabilität der Emulsionen bei Zusatz von hydrophober Kieselsäure gemacht. Auch in EP-B 582 611 wird hydrophobe Kieselsäure verwendet, ohne dass Angaben zur Lagerstabilität gemacht werden. Wenn selbstdispergierende Zusammensetzungen mit Siloxanen, die einen hohen Anteil an basischen Stickstoff haben, formuliert werden, ist auch eine hydrophobe Kieselsäure stabil dispergierbar (EP-B 609524). Allerdings neigen derartige Formulierungen aufgrund des Amingehaltes zu Vergilbungen und Verfärbungen bei der Anwendung.

Gegenstand der Erfindung sind wässrige Dispersionen von Organosiliciumverbindungen herstellbar unter Verwendung von
(A) einer Mischung im Wesentlichen bestehend aus anorganischem Füllstoff (B) und Siloxan (C) enthaltend Einheiten der Formel

   Rₐ (R¹O)_{b}SiO_{(4-a-b)/2} (I),

   worin
   R gleich oder verschieden sein kann und Wasserstoffatom oder einen einwertigen, SiC-gebundenen, gegebenenfalls substituierten Kohlenwasserstoffrest bedeutet,
   R¹ Wasserstoffatom bedeutet,
   a 0, 1, 2 oder 3, vorzugsweise 1, 2 oder 3, ist und
   b 0, 1, 2 oder 3, vorzugsweise 0 oder 1, ist, mit der Maßgabe, dass die Summe aus a und b kleiner oder gleich 3 ist, mit einer Viskosität bei 25°C von 5 bis 1 000 000 mPas,
   wobei die Mischung (A) eine Viskosität von 10 bis 10 000 000 mPas bei 25°C aufweist,
(D) Silanen der Formel

   R³_{c}R²_{d}Si(OR⁴)_{4-c-d} (II),

   worin
   R² gleich oder verschieden sein kann und einwertige, SiC-gebundene, gegebenenfalls substituierte Kohlenwasserstoffreste mit 1 bis 3 Kohlenstoffatomen bedeutet,
   R³ gleich oder verschieden sein kann und einwertige, SiC-gebundene, gegebenenfalls substituierte Kohlenwasserstoffreste mit mindestens 4 Kohlenstoffatomen, die mit Heteroatomen und/oder Carbonylgruppen unterbrochen sein können, bedeutet,
   R⁴ gleich oder verschieden sein kann und einwertige, gegebenenfalls substituierte Kohlenwasserstoffreste oder Wasserstoff bedeutet,
   c 1, 2 oder 3, bevorzugt 1, ist und
   d 0, 1 oder 2, bevorzugt 0 oder 1, ist, mit der Maßgabe, dass die Summe aus c und d 1, 2 oder 3 ist,
   und/oder deren Teilhydrolysaten,
   gegebenenfalls
(E) Organopolysiloxanen,
(F) Emulgator,
(G) Wasser und
   gegebenenfalls
(H) weiteren Stoffen.
   Ein weiterer Gegenstand der Erfindung ist ein Verfahren zur Herstellung wässriger Dispersionen von Organosiliciumverbindungen, bei dem Mischung (A) hergestellt durch Vermischen von anorganischem Füllstoff (B) und Siloxan (C) enthaltend Einheiten der Formel (I) mit einer Viskosität bei 25°C von 5 bis 1 000 000 mPas, wobei die MisChung (A) eine Viskosität von 10 bis 10 000 000 mPas bei 25°C aufweist, mit
(D) Silanen der Formel (II) und/oder deren Teilydrolysaten,
   gegebenenfalls
(E) Organopolysiloxanen,
(F) Emulgator,
(G) Wasser und
   gegebenenfalls
(H) weiteren Stoffen
   vermischt wird,

Im Rahmen der vorliegenden Erfindung sollen von dem Begriff Organopolysiloxane sowohl polymere, oligomere wie auch dimere Siloxane mitumfasst werden.

Beispiele für die erfindungsgemäß eingesetzten Füllstoffe (B) sind gefällte oder pyrogene Kieselsäuren, Titandioxid oder Aluminiumoxid.

Die erfindungsgemäß eingesetzten Füllstoffe (B) können sowohl hydrophob wie auch hydrophil sein, wobei Füllstoff (B) bevorzugt hydrophob ist. Verfahren zur Hydrophobierung von Füllstoffen, insbesondere Kieselsäuren, sind vielfach bekannt.

Bevorzugt handelt es sich bei Füllstoff (B) um Kieselsäuren, besonders bevorzugt um gefällte oder pyrogene Kieselsäuren.

Vorzugsweise weist Komponente (B) eine BET-Oberfläche von 20 bis 1000 m²/g, besonders bevorzugt 50 bis 800 m²/g, insbesondere von 100 bis 400 m²/g, auf.

Füllstoffe (B) haben eine Partikelgröße von bevorzugt weniger als 10 µm, besonders bevorzugt 10 nm bis 1 µm.

Füllstoffe (B) haben eine Agglomeratgröße von bevorzugt weniger als 100 µm, besonders bevorzugt 100 nm bis 10 µm.

Falls als Komponente (B) hydrophobe Kieselsäure eingesetzt werden soll, kann es sich dabei um hydrophobierte, z.B. kommerziell erhältliche vorbehandelte Kieselsäure handeln. Die Hydrophobierung kann aber alternativ auch in situ während der Herstellung der Mischung (A) erfolgen.

Die in situ Hydrophobierung der hydrophilen Kieselsäure kann dabei durch bekannte Verfahren erfolgen, wie z.B. durch mehrstündiges Erhitzen der Kieselsäure mit Silazanen auf Temperaturen von 100 bis 200°C gegebenenfalls unter Zusatz von Katalysatoren.

Die bevorzugt als Komponente (B) eingesetzte hydrophobe Kieselsäure hat einen Kohlenstoffgehalt von bevorzugt 0,1 bis 5,0 Gew.-%, insbesondere von 0,5 bis 3 Gew.-%.

Die bevorzugt als Komponente (B) eingesetzte hydrophobe Kieselsäure zeigt eine Hydrophobie entsprechend dem in DE-A 2107082, Seite 3, 2. Absatz beschriebenen Methanoltitrationstest von bevorzugt größer als 30, besonders bevorzugt größer als 50, insbesondere 50 bis 70.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pen-tylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind mit Halogenatomen, Aminresten, Glycidoxyresten oder Mercaptoresten substituierte Kohlenwasserstoffreste, die z.B. der Trifluorpropylrest, der Aminopropylrest, der Aminoethylaminopropylrest, der Glycidoxypropylrest und der Mercaptopropylrest.

Bevorzugt handelt es sich bei Rest R um gegebenenfalls mit sauerstoff- oder stickstoffhaltigen Gruppen substituierte Kohlenwasserstoffreste mit 1 bis 18 Kohlenstoffatomen, besonders bevorzugt um Alkylreste mit 1 bis 18 Kohlenstoffatomen oder um aromatische Kohlenwasserstoffreste mit 6 bis 9 Kohlenstoffatomen, ganz besonders bevorzugt um Methyl-, n-Hexyl-, n-Heptyl-, n-Octyl-, iso-Octyl-, n-Dodecyl-, Phenyl- und Ethylphenylreste, insbesondere bevorzugt um den Methylrest.

Bevorzugt handelt es sich bei Rest R¹ um Wasserstoffatom oder gegebenenfalls mit Organyloxygruppen substituierte Alkylreste mit 1 bis 4 Kohlenstoffatomen, besonders bevorzugt um Wasserstoffatom, den Methyl-, Ethyl-, n-Butyl-, i-Propyl- und 2-Methoxyethylreste, insbesondere um Wasserstoffatom, Methyl- oder Ethylreste.

Bei dem erfindungsgemäß eingesetzten Siloxan (C) enthaltend Einheiten der Formel (I) handelt es sich bevorzugt um solche bestehend aus Einheiten der Formel (I), besonders bevorzugt um im Wesentlichen lineare Organopolysiloxane, insbesondere um im Wesentlichen lineare Organopolysiloxane mit Triorganylsilyl- oder Hydroxydiorganylsilylendgruppen.

Die erfindungsgemäß eingesetzten, im Wesentlichen linearen Siloxane (C) können herstellungsbedingt einen molaren Anteil von Verzweigungen, d.h. T- und/oder Q-Einheiten, von bevorzugt bis zu 1%, besonders bevorzugt bis zu 1000 ppm, aufweisen.

Beispiele für die erfindungsgemäß eingesetzten Siloxane (C) sind Polydimethylsiloxane mit Trimethylsilylendgruppen, Polydimethylsiloxane mit Vinyldimethylsilylendgruppen und Polydimethylsiloxane mit Hydroxydimethylsilylendgruppen.

Die erfindungsgemäß eingesetzten Siloxane (C) haben eine Viskosität bei 25°C von vorzugsweise 50 bis 50 000 mPas, besonders bevorzugt von 100 bis 10 000 mPas.

Verbindungen enthaltend Einheiten der Formel (I) sind kommerziell verfügbar bzw. nach allgemein bekannten chemischen Methoden darstellbar.

Die erfindungsgemäß eingesetzte Mischung (A) enthält Füllstoff (B) in Mengen von bevorzugt 1 bis 60 Gewichtsteilen, besonders bevorzugt 10 bis 50 Gewichtsteilen, insbesondere 10 bis 35 Gewichtsteilen, jeweils bezogen auf 100 Gewichtsteile Mischung (A).

Die erfindungsgemäß eingesetzte Mischung (A) kann neben Füllstoff (B) und Siloxan (C) bis zu einem Gehalt von 5 Gew.-% weitere Bestandteile z.B. herstellungsbedingte Verunreinigungen, wie cyclische Siloxane, Wasser und Reste von Katalysatoren, enthalten, was aber nicht bevorzugt ist.

Zur Herstellung,der erfindungsgemäß eingesetzten Mischung (A) werden Füllstoff (B) mit Siloxan (C) nach an sich bekannten Verfahren, z.B. in Knetern, Dissolvern, Kolloidmühlen miteinander vermischt. Vorzugsweise wird Füllstoff (B) erst mit einer Teilmenge des Siloxans (C) intensiv vermischt und dann mit weiterem Siloxan (C) verdünnt.

Die Herstellung der Mischung (A) wird bei Temperaturen von vorzugsweise 0 bis 250°C, bevorzugt 5 bis 200°C, besonders bevorzugt 20 bis 150°C, und einem Druck der umgebenden Atmosphäre, also zwischen 900 und 1100 hPa, durchgeführt.

Bei der Herstellung der Mischung (A) wird eine Mischenergie von vorzugsweise mehr als 3,0 kJ/kg, besonders bevorzugt mehr als 8 kJ/kg, insbesondere 10 bis 150 kJ/kg, eingetragen.

Bei der erfindungsgemäß eingesetzten Mischung (A) handelt es sich bevorzugt um eine homogene Dispersion.

Die Mischung (A) hat bei 25°C eine Viskosität von bevorzugt 1 000 bis 1 000 000 mPas, besonders bevorzugt 10 000 bis 200 000 mPas.

Bevorzugt hat die erfindungsgemäß eingesetzte Dispersion (A) viskoelastische Eigenschaften, bestimmt mit oszillierender Viskositätsmessung nach DIN 54458, Entwurf von 01/2010. Der Speichermodul dieser Dispersionen (A) bei einer Amplitude von 1% und einer Kreisfrequenz von 100/s und einer Temperatur von 25°C beträgt vorzugsweise mehr als 10 Pa, besonders bevorzugt 10 Pa bis 10000 Pa, insbesondere 200 Pa bis 1000 Pa. Diese Dispersionnen (A) können eine Fließgrenze, bestimmt nach DIN 54458, von bevorzugt mindestens 1 Pa, besonders bevorzugt 1 Pa bis 1000 Pa, insbesondere 5 Pa bis 50 Pa, ausweisen.

Die Herstellung der erfindungsgemäß eingesetzten Mischung (A) kann nach bekannten Verfahren erfolgen, z.B. durch Kneten, mit Dissolverrührern, Rotor-Stator Homogenisatoren oder Walzenknetern, Nach einer bevorzugten Verfahrensweise wird erst ein Teil des Siloxans (C) mit dem gesamten Füllstoff (B) vermischt, und dann wird die Mischung schrittweise mit weiterem Siloxan (C) vermischt. Wenn als Füllstoff (B) eine hydrophile Kieselsäure eingesetzt wird, muss diese bei der Herstellung von Mischung (A) in situ hydrophobiert werden. Verfahren zur in situ Hydrophobierung sind dem Fachmann z.B. aus Verfahren zur Herstellung von Siliconkautschuken oder Siliconantischaummitteln bekannt, Dabei kann die Hydrophobierung der Komponenten (B) durch einfaches Erhitzen auf vorzugsweise 100 bis 180°C mit Komponente (C) erfolgen, wobei z.B. die Reaktion mit Katalysatoren wie Säuren oder Basen z.B. durch KOH unterstützt werden kann. Bevorzugt werden jedoch niedermolekulare Hydrophobierungsmittel eingesetzt wie cyclische Siloxane z.B. Octamethylcyclotetrasiloxan, Silane wie z.B. Dimethyldichlorsilan oder Dimethyldimethoxysilan oder Silazane wie Hexamethyldisilazan. Besonders bevorzugt erfolgt die in situ Hydrophobierung mit Hexamethyldisilazan in Gegenwart von 0,1 bis 1 Teilen Wasser je Teil Hexamethyldisilazan bei bevorzugt 100 bis 200°C, insbesondere 120 bis 180°C, für 20 Minuten bis 10 Stunden, insbesondere 1 bis 5 Stunden.

Die erfindungsgemäßen Dispersionen enthalten Mischung (A) in Mengen von bevorzugt 2 bis 40 Gew.-%, besonders bevorzugt 10 bis 25 Gew.-%, jeweils bezogen auf die Gesamtmenge der Diesersion.

Beispiele für den Rest R³ sind die für Rest R angegebenen Reste mit mindestens 4 Kohlenstoffatomen.

Beispiele für substituierte Reste R³ sind Aminoethylaminopropyl-, Glycidoxypropyl- und Methacrylpropylrest.

Bei Rest R³ handelt es sich vorzugsweise um gegebenenfalls mit Hydroxy-, Alkoxy-, Ester-, Epoxy- oder Aminogruppen substituierte Kohlenwasserstoffreste mit 6 bis 18 Kohlenstoffatomen, die mit O, N, S oder C=O unterbrochen sein können, besonders bevorzugt um Alkylreste, insbesondere um den n-Hexylrest, n-Octylrest und iso-Octylrest, wie der 2,2,4-Trimethylpentylrest, n-Decylrest, n-Dodecylrest, n-Tetradecylrest, n-Hexadecylrest und octadecylrest.

Bevorzugt handelt es sich bei Rest R⁴ um gegebenenfalls substituierte Alkylreste mit 1 bis 4 Kohlenstoffatomen, besonders bevorzugt um den Methyl-, Ethyl-, n-Butyl-, 2-Methoxyethyl- oder Isopropylrest, insbesondere um den Ethylrest.

Bevorzugt handelt es sich bei Rest R2 um Alkylreste mit 1 -bis 3 Kohlenstoffatomen, wie Methyl-, Ethyl-, n-Propyl- und Isopropylreste, besonders bevorzugt um den Methylrest.

Beispiele für erfindungsgemäß eingesetzte Silane (D) sind Isobutyltriethoxysilan, Hexyltriethoxysilan, Hexylmethyldiethoxysilan, n-Octyltrimethoxysilan, n-Octyltriethoxysilan, n-Octyltributoxysilan, Isooctyltriethoxysilan, n-Decyltriethoxysilan, Dodecylmethyldimethoxysilan, Hexadecyltrimethoxysilan, Octadecylmethyldimethoxysilan, Octadecylmethyldiethoxysilan und Octadecyltriethoxysilan sowie Aminoethylaminopropyltriethoxysilan, Glycidoxypropyltrimethoxysilan und Methacrylpropyltriethoxysilan.

Bevorzugt handelt es sich bei Komponente (D) um n-Hexyltriethoxysilan, n-Octyltriethoxysilan und Isooctyltriethoxysilan sowie deren Teilhydrolysate, wobei n-Octyltriethoxysilan und Isooctyltriethoxysilan sowie deren Teilhydrolysate besonders bevorzugt sind.

Falls es sich bei Komponente (D) um Teilhydrolysate handelt, sind solche mit 2 bis 10 Si-Atomen bevorzugt. Teilhydrolysate entstehen meist dadurch, dass ein Teil der Reste OR⁴ in den Silanen der Formal (II) durch Reaktion mit Wasser oder Wasserdampf abgespalten wurde und an Silizium gebundene OH-Gruppen entstehen. Diese können wiederum unter Abspaltung von Wasser zu Siloxanbindungen kondensieren, wodurch Oligomere entstehen, die neben Gruppen OR⁴ auch OH-Gruppen enthalten können. Teilhydrolysate von Silanen der Formel (II) können auch als Verunreinigung im Silan der Formel (IX) enthalten sein.

Die erfindungsgemäßen Dispersionen enthalten Komponente (D) in Mengen von bevorzugt 5 bis 1500 Gewichtsteilen, besonders bevorzugt 100 bis 500 Gewichtsteilen, jeweils bezogen auf 100 Gewichtsteile Mischung (A).

Bei den erfindungsgemäß gegebenenfalls eingesetzten Siloxanen (E) kann es sich um beliebige, bisher bekannte lineare, cyclische und verzweigte Siloxane handeln.

Bevorzugt handelt es sich bei den Siloxanen (E) um solche, die aus Einheiten der Formel (I) bestehen.

Beispiele für gegebenenfalls eingesetzte lineare Siloxane (E) sind mit Triorgansilyloxygruppen terminierte Polydimethylsiloxane, die Hydroxylgruppen und/oder Aminoalkylgruppen enthalten können sowie die für Siloxan (C) genannten Beispiele.

Die gegebenenfalls eingesetzten linearen Siloxane (E) haben eine Viskosität bei 25°C von bevorzugt 10 bis 1 000 000 mPas, besonders bevorzugt 30 bis 10 000 mPas.

Insbesondere können als lineare Siloxane (E) mit Hydroxylgruppen terminierte Polydimethylsiloxane mit einer Viskosität von 20 bis 200 mPas oder Aminoethylaminopropylgruppen tragende Polydimethylsiloxane mit einer Viskosität von 100 bis 5000 mPas eingesetzt werden.

Beispiele für gegebenenfalls eingesetzte cyclische Siloxane (E) sind Octamethylcyclotetrasiloxan, Decamethylcyclopentasiloxan und Dodecamethylcyclohexasiloxan.

Beispiele für gegebenenfalls eingesetzte verzweigte Siloxane (E) sind Alkoxygruppen enthaltende Organopolysiloxane, die z.B. durch Umsetzung von Methyltrichlorsilan und gegebenenfalls anderen Alkyltrichlorsilanen oder Phenyltrichlorsilan mit Ethanol in Wasser herstellbar sind und Summenformeln wie CH₃Si (OCH₂CH₃) _{0,8}O_{1,1} oder C₆H₅Si (OCH₂CH₃)_{0,7}O_{1,2} entsprechen, oligomere Siloxane, die durch Hydrolyse/Kondensation aus Methyltriethoxysilan und Isooctyltriethoxysilan erhältlich sind und z.B. der Formel ([MeSiO_{3/2}]_{0,3-0,5}[IOSiO_{3/2}]_{0,02-0.2}[EtO_{1/2}]_{0,3-0,6})ₓ entsprechen, wobei Me für Methyl-, IO für Isooctyl- und Et für Ethylrest sowie x für den Kondensationsgrad steht, und Siliconharze aus Einheiten der Formel (I), bei denen in mindestens 70% der Einheiten der Formel (I) a=1 ist und in den anderen Einheiten der Formel (I) a=2 ist, vorzugsweise Siliconharze, bei denen in mindestens 80% der Einheiten der Formel (I), insbesondere 90% der Einheiten der Formel (I), a=1 ist, mit einem Gehalt an Alkoxygruppen von 1 bis 6 Gew.-% und an Hydroxygruppen von 0,2 bis 1 Gew.-%.

Die gegebenenfalls eingesetzten verzweigten Siloxane (E) sind entweder bei 25°C und 1000 hPa Feststoffe oder haben bei 25°C eine Viskosität von bevorzugt 10 bis 1 000 000 mPas, besonders bevorzugt 100 bis 100 000 mPas, insbesondere 1 000 bis 50 000 mPas, bzw. eine gewichtsmittlere Molmasse Mw von bevorzugt 1000 bis 100 000 g/mol, besonders bevorzugt 2 000 bis 10 000.

Die erfindungsgemäß gegebenenfalls eingesetzten Siliconharze (E) können bei 23°C und 1000 hPa sowohl fest als auch flüssig sein, wobei Siliconharze (E) bevorzugt flüssig sind.

Bevorzugt handelt es sich bei den gegebenenfalls eingesetzten Siloxanen (E) um Siliconharze, wobei Mischungen aus hochviskosen Siliconharzen mit niedrigviskosen Siliconharzen oder Siliconölen besonders bevorzugt sind. Diese Mischungen haben bei 25°C eine Viskosität von vorzugsweise 100 bis 100000 mPas, insbesondere 1000 bis 10000 mPas.

Falls die erfindungsgemäßen Dispersionen Siloxane (E) enthalten, handelt es sich um Mengen von bevorzugt 5 bis 1000 Gewichtsteilen, besonders bevorzugt 50 bis 200 Gewichtsteilen, jeweils bezogen auf 100 Gewichtsteile Mischung (A).

Als Emulgatoren (F) können alle Emulgatoren eingesetzt werden, die auch bisher für die Herstellung von Siloxandispersionen verwendet wurden. Als Emulgatoren (F) können anionische, nichtionische, kationische und amphotere Tenside oder deren Mischungen eingesetzt werden. Alternativ können auch polymere Verbindungen, die emulgierende Eigenschaften haben, wie Polyvinylalkohole, insbesondere Polyvinylalkohole mit einem Verseifungsgrad von 75-95 %, eingesetzt werden.

Bei der gegebenenfalls eingesetzten Komponente (F) handelt es sich bevorzugt um nichtionische Emulgatoren oder um Mischungen aus nichtionogenen Emulgatoren und ionischen Emulgatoren.

Beispiele für die erfindungsgemäß eingesetzten nichtionischen Emulgatoren (F) sind Sorbitanfettsäureester, ethoxylierte Sorbitanfettsäureester, ethoxylierte Fettsäuren, ethoxylierte lineare oder verzweigte Alkohole mit 10 bis 20 Kohlenstoffatomen, ethoxylierte Alkylphenole, Pentaerythritfettsäurester, Glycerinester und Alkylpolyglycoside.

Bevorzugt handelt es sich bei den nichtionischen Emulgatoren (F) um Sorbitanfettsäureester, ethoxylierte Sorbitanfettsäureester, ethoxylierte Fettsäuren, ethoxylierte lineare oder verzweigte Alkohole mit 10 bis 20 Kohlenstoffatomen und ethoxylierte Triglyceride.

Vorzugsweise enthalten die erfindungsgemäßen Dispersionen keine ethoxylierten Alkylphenole, da diese bekannterweise nicht umweltverträglich sind.

Wenn nichtionische Emulgatoren als Komponente (F) eingesetzt werden, kann es sich nur um eine Art eines nichtionogenen Emulgators handeln oder um ein Gemisch von mehreren nichtionogenen Emulgatoren. Vorzugsweise hat mindestens ein nichtionischer Emulgator (F) einen HLB-Wert von größer oder gleich 12, insbesondere größer oder gleich 14.

Vorzugsweise werden als Komponente (F) Mischungen von nichtionogenen Emulgatoren eingesetzt, von denen mindestens ein Emulgator einen HLB-Wert größer oder gleich 12 hat. Dabei beträgt der Anteil an Emulgatoren (F) mit einem HLB-Wert größer oder gleich 12 im Emulgatorgemisch (F) bevorzugt mindestens 30 Gew.-%.

Der HLB-Wert ist Ausdruck des Gleichgewichts zwischen hydrophilen und hydrophoben Gruppen eines Emulgators. Die Definition des HLB-Werts sowie Verfahren zu deren Ermittlung sind allgemein bekannt und z.B. in Journal of Colloid and Interface Science 298 (2006) 441-450 sowie der dort zitierten Literatur beschrieben.

Als anionische Emulgatoren (F) können z.B. Alkylsulfonate, Alkylsulfate und Alkylphosphate eingesetzt werden.

Beispiele für kationische Emulgatoren (F) sind alle bekannten quartären Ammoniumverbindungen, die mindestens einen substituierten oder unsubstituierten Kohlenwasserstoffrest mit mindestens 10 Kohlenstoffatomen tragen, wie Dodecyldimethylammoniumchlorid, Tetradecyltrimethylammoniumbromid, Stearyltrimethylammoniumchlorid, Diatearyldimethylammoniumchlorid, Cetyltrimethylammoniumchlorid, Behenyltrimethylammoniumbromid, Dodecylbenzyldimethylammoniumchlorid und Benzyltrimethylammoniumchlorid.

Wenn als Komponente (F) kationische Emulgatoren eingesetzt werden, so sind das bevorzugt Aryl- oder Alkyltrimethylammoniumsalze wie Stearyltrimethylammoniumchlorid und Cetyltrimethylammoniumchlorid, besonders bevorzugt Benzyltrialkylammoniumsalze, insbesondere Trimethylbenzylammoniumchlorid und Trimethylbenzylammoniummethosulfat.

Weitere Beispiele sind alle bekannten quartären Imidazoliniumverbindungen, die mindestens einen substituierten oder unsubstituierten Kohlenwasserstoffrest mit mindestens 10 Kohlenstoffatomen tragen, wie 1-Methyl-2-stearyl-3-stearylamidoethylimidazolinium methosulfat, 1-Methyl-2-norstearyl-3-stearyl-amidoethylimidazolinium-methosulfat, 1-Methyl-2-oleyl-3-oleylamidoethylimidazolinium-methosulfat, 1-Methyl-2-stearyl-3-methylimidazolinium-methosulfat, 1-Methyl-2-behenyl-3-methylimidazolinium-methosulfat und 1-Methyl-2-dodecyl-3-methylimidazoliniummethosulfat.

Zur Herstellung der erfindungsgemäßen Dispersionen wird Komponente (F) in Mengen von bevorzugt 0,1 bis 15 Gew.-%, besonders bevorzugt 0,3 bis 8 Gew.-%, jeweils bezogen auf die Gesamtmenge der Dispersion eingesetzt.

Bei dem erfindungsgemäß eingesetzten Wasser (G) kann es sich um beliebige Arten von Wasser, wie etwa natürliche Wässer, wie z.B. Regenwasser, Grundwasser, Quellwasser, Flusswasser und Meerwasser, chemische Wässer, wie z.B. vollentsalztes Wasser, destilliertes oder (mehrfach) redestilliertes Wasser, Wässer für medizinische oder pharmazeutische Zwecke, wie z.B. gereinigtes Wasser (Aqua purificata; Pharm. Eur. 3), Aqua deionisata, Aqua destillata, Aqua bidestillata, Aqua ad injectionam oder Aqua conservata, Trinkwasser nach deutscher Trinkwasserverordnung und Mineralwässer handeln.

Bevorzugt handelt es sich bei dem erfindungsgemäß eingesetzten Wasser (G) um Wasser mit einer Leitfähigkeit von weniger als 10 µS/cm, insbesondere um weniger als 2 µS/cm.

Die erfindungsgemäß hergestellten Dispersionen enthalten Komponente (G) in Mengen von bevorzugt 10 bis 95 Gew.-%, besonders bevorzugt 30 bis 60 Gew.-%, jeweils bezogen auf die Gesamtmenge an Dispersion.

In einer Variante der vorliegenden Erfindung ist Komponente (G) zu weniger als 30% enthalten, so dass standfeste cremige Produkte erhalten werden, die insbesondere dort vorteilhaft sind, wo eine Imprägnierung an senkrechten oder waagerechten Flächen über Kopf zu verarbeiten ist. Es ist ein Kennzeichen diese erfindungsgemäßen Cremes, dass sie eine Fließgrenze, bestimmt mit oszillierender Viskositätsmessung nach DIN 54458, von mindestens 5 Pa, insbesondere mindestens 10 Pa, aufweisen.

Bei den erfindungsgemäß gegebenenfalls eingesetzten weiteren Komponenten (H) kann es sich um alle Zusatzstoffe handeln, die auch bisher in wässrigen Dispersionen eingesetzt worden sind, wie z.B. Verdicker, Organosiliciumverbindungen, die unterschiedlich sind zu Komponenten (C), (D) und (E), Katalysatoren, Substanzen zum Einstellen des pH-Wertes, Duftstoffe, Farbstoffe, Frostschutzmittel, wie Glycole und Glycolether, sowie Konservierungsmittel.

Beispiele für gegebenenfalls eingesetzte Verdicker (H) sind Polyacrylsäure, Polyacrylate, Celluloseether wie Carboxymethylcellulose und Hydroxyethylcellulose, natürliche Gume wie Xanthan Gum und Polyurethane.

Beispiele für gegebenenfalls eingesetzte Organosilciumverbindungen (H) sind Silane der Formel (II) mit c=0, wie etwa Tetraethoxysilan, Trimethylmethoxysilan, Aminopropyltriethoxysilan und Aminopropylmethyldimethoxysilan.

Beispiele für gegebenenfalls eingesetzte Katalysatoren (H) sind Amine und metallorganische Verbindungen wie z.B. Dibutylzinndilaurat.

Beispiele für gegebenenfalls eingesetzte Substanzen zum Einstellen des pH-Wertes (H) sind neben Aminosilanen auch Amine, wie z.B. Monoethanolamin oder Alkalihydroxide. Wenn es erforderlich ist, um die Konstanz des pH-Wertes über eine längeren Zeitraum zu gewährleisten, können auch Puffersysteme, wie Salze der Essigsäure, Salze der Phosphorsäure, Salze der Zitronensäure jeweils in Kombination mit der freien Säure je nach gewünschtem pH-Wert verwendet werden.

Bevorzugt handelt es sich bei der gegebenenfalls eingesetzten Komponente (H) um Amine und Aminosilane, besonders bevorzugt um Triethanolamin.

Falls zur Herstellung der erfindungsgemäßen Dispersionen Komponente (H) eingesetzt wird, handelt es sich um Mengen von bevorzugt 0,01 bis 5 Gew.-%, besonders bevorzugt 0,1 bis 0,5 Gew.-%, jeweils bezogen auf die Gesamtmenge der Dispersion. Die erfindungsgemäßen Dispersionen enthalten bevorzugt Komponente (H).

Die erfindungsgemäßen Dispersionen sind vorzugsweise frei von mit Wasser nicht mischbaren Lösungsmitteln oder enthalten mit Wasser nicht mischbare Lösungsmittel in Mengen von maximal 1 Gew.-%, bezogen auf die Gesamtmenge an Dispersion.

Unter "mit Wasser nicht mischbaren Lösungsmitteln" im Sinne der vorliegenden Erfindung sind alle Lösungsmittel zu verstehen, die bei 20°C und einem Druck von 101,325 kPa mit Wasser in Mengen von maximal 1g/l löslich sind.

Insbesondere haben diese mit Wasser nicht mischbaren Lösungsmittel bei 20°C einen Dampfdruck von 0,1 kPa oder höher.

Beispiele für solche mit Wasser nicht mischbaren Lösungsmittel sind Benzol, Toluol, Xylol, Hexan, Cyclohexan und paraffinische Kohlenwasserstoffgemische.

Bevorzugt enthalten die erfindungsgemäßen Dispersionen keine über die Komponenten (A) bis (H) hinausgehenden Komponenten.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Die Herstellung der erfindungsgemäßen wässrigen Dispersionen kann nach an sich bekannten Verfahren erfolgen. Üblicherweise erfolgt die Herstellung durch einfaches Verrühren aller Bestandteile bei Temperaturen von vorzugsweise 1 bis 50°C und gegebenenfalls anschließendes Homogenisieren, z.B. mit Strahldispergatoren, Rotor-Stator-Homogenisatoren bei Umfangsgeschwindigkeiten von vorzugsweise 5 bis 40 m/s, Kolloidmühlen oder Hochdruckhomogenisatoren bei Homogenisierdrücken von bevorzugt 50 bis 2000 bar.

In einer bevorzugten Ausführungsform des erfindungsgemäßen Verfahrens werden die Komponenten (C) und (B) in einem geeigneten Mischer, z.B. einem Kneter, homogen vermischt. Diese Mischung (A) wird dann mit Komponente (D), ggf. Komponenten (E) und ggf. Komponenten (H) zu einer Mischung aus Komponenten (F) und (G) gegeben wobei die Mischreihenfolge variiert werden kann. Die eingesetzten Komponenten werden vorzugsweise mit einem schnelllaufenden Rührer, z.B. einer Dissolverscheibe oder einem Rotor-Stator Homogenisator vermischt. Vorzugsweise schließt sich daran ein Homogensieren mit einem Hochdruckhomogenisator an.

In einer besonders bevorzugten Ausführungsform des erfindungsgemäßen Verfahrens werden Komponenten (F) und ein Teil der Komponente (G) vorgelegt, nacheinander oder gemeinsam Komponenten (A), (D), ggf. (E) und ggf. (H) zugegeben und homogen vermischt und anschließend die restlichen Mengen an Komponenten (G) zugegeben, vermischt und homogenisiert.

Homogenisiertechniken einschließlich Hochdruckhomogenisatoren sind allgemein bekannt. Hierzu sei z.B. auf Chemie Ingenieur Technik, 74(7), 901-909 2002 verwiesen.

Die erfindungsgemäßen Dispersionen sind vorzugsweise milchige, weiße bis beige Flüssigkeiten.

Die erfindungsgemäßen Dispersionen haben einen pH-Wert von vorzugsweise 5 bis 9, insbesondere von 6 bis 8.

Die erfindungsgemäßen Dispersionen haben einen Anteil an nicht flüchtigen Verbindungen (z.B. bestimmt nach ASTM D 5095) von vorzugsweise 10 bis 90 Gew.-%, besonders bevorzugt von 20 bis 70 Gew.-%.

Die erfindungsgemäßen Dispersionen haben eine volumenmittlere Teilchengröße von bevorzugt 0,1 bis 10 µm, insbesondere von 0,3 bis 1,5 µm.

Die Dispersität der erfindungsgemäßen Dispersionen ist im Bereich von bevorzugt 0,5 bis 5, besonders bevorzugt 1,5 bis 3. Dieser Wert wird berechnet aus (D₉₀-D₁₀)/D₅₀, wobei Dₓ für die Teilchengröße steht, bei der x% des Volumens der inneren Phase sich in Teilchen kleiner oder gleich dieser Teilchengröße befinden, gemessen nach dem Prinzip der Fraunhoferbeugung entsprechend ISO 13320.

Die erfindungsgemäßen Dispersionen haben eine Viskosität von vorzugsweise weniger als 10000 mPas, insbesondere weniger als 1000 mPas, jeweils gemessen bei 25°C.

Die erfindungsgemäßen Dispersionen haben den Vorteil, dass sie eine sehr hohe Lagerstabilität haben und keine Verfärbungen verursachen.

Die erfindungsgemäßen Dispersionen haben den Vorteil, dass sie kostengünstig herstellbar sind.

Die erfindungsgemäßen Dispersionen haben den Vorteil, dass sie einfach in der Handhabung sind.

Die erfindungsgemäßen Dispersionen haben den Vorteil, dass sie leicht verdünnbar sind und auch in verdünnter Form eine sehr hohe Lagerstabilität haben.

Das Verfahren zur Herstellung der erfindungsgemäßen Dispersionen hat den Vorteil, dass es einfach in der Durchführung ist und in einem breiten Mengenbereich, von Labor bis großtechnischem Maßstab, angewendet werden kann.

Die erfindungsgemäßen Dispersionen haben den Vorteil, dass sie eine sehr gute und beständige Imprägnierwirkung und ein sehr gutes Eindringverhalten auf unterschiedlichen Untergründen ausprägen.

Die erfindungsgemäßen wässrigen Dispersionen können für alle Zwecke eingesetzt werden, für die auch bisher Dispersionen auf der Basis von Organosiliciumverbindungen eingesetzt worden sind. Sie sind z.B. hervorragend als Bautenschutzmittel geeignet, insbesondere zum Hydrophobieren verschiedener mineralischer oder organischer Untergründe. Die Art und Weise der Anwendung derartiger Dispersionen ist dem Fachmann bekannt.

Ein weiterer Gegenstand der vorliegenden Erfindung ist ein Verfahren zur Behandlung von Substraten, dadurch gekennzeichnet, dass die Substrate mit den erfindungsgemäßen Dispersionen in Kontakt gebracht werden.

Beispiele für Substrate, die mit den erfindungsgemäßen Dispersionen behandelt werden können, sind mineralische Stoffe, wie Mauerwerk, Mörtel, Ziegel, Kalkstein, Marmor, Kalksandstein, Sandstein, Granit, Porphyr, Beton und Porenbeton, organische Stoffe, wie Holz, Papier, Pappe, Textilien, Kunst- und Naturfasern.

Im Allgemeinen dringen die Dispersionen bei dem erfindungsgemäßen Verfahren in die Kapillaren des Substrates ein und trocknen dort.

Bevorzugt werden bei dem erfindungsgemäßen Verfahren mineralische Substrate und Holzwerkstoffe eingesetzt.

Bei der erfindungsgemäßen Behandlung handelt es sich bevorzugt um Imprägnierung, Beschichtung, Grundierung und Injektage, besonders bevorzugt um Imprägnierung, wobei insbesondere das Substrat mit der Dispersion in Kontakt gebracht wird und die Dispersion partiell oder vollständig in das Substrat eindringt.

Bei der erfindungsgemäßen Imprägnierung handelt es sich bevorzugt um die hydrophierende Imprägnierung und kann sowohl als Imprägnierung der Oberfläche als auch als Injektage oder als Massehydrophobierung erfolgen.

Die mit den erfindungsgemäß hergestellten Dispersionen erfolgte Massehydrophobierung von Beton erlaubt z.B. aufgrund des verbesserten Abperleffektes eine verbesserte Entschalung.

Durch die erfindungsgemäße Hydrophobierung wird die Wasseraufnahme des Substrats drastisch reduziert, was die Wärmeleitfähigkeit absenkt, aber auch die Zerstörung der Baustoffe durch den Einfluss von Frost- und Tau-Zyklen oder Salz oder aber bei Holzwerkstoffen durch Fäulnis oder Pilzbefall verhindert. Damit wird nicht nur die Werthaltigkeit des so behandelten Werkstoffs gesichert sondern z.B. auch ein niedriger Energieverbrauch beim Heizen oder Klimatisieren.

Für die erfindungsgemäßen Imprägnieranwendungen werden die erfindungsgemäßen Dispersionen durch gängige und bisher bekannte Methoden der Verteilung auf die Oberfläche des Substrates gegeben, wie z.B. durch Streichen, Spritzen, Rakeln, Rollen, Gießen, Spachteln, Tauchen und Walzen. Für die Mauerwerksbehandlung ist es erforderlich, dass die Zubereitungen weit in das Mauerwerk eindringen. Daher sind für die Mauerwerksbehandlung niedrigviskose Dispersionen bevorzugt. Die Eigenschaft, in das Mauerwerk einzudringen kann eine Materialeigenschaft sein oder das Eindringen wird künstlich gefördert, indem die Dispersionen mit erhöhtem Druck in das Mauerwerk befördert werden.

Die erfindungsgemäßen Dispersionen können auch zur Formylierung von Anstrichstoffen in Kombinationen mit organischen Dispersionen und Pigmenten verwendet werden, um diesen Anstrichstoffen hydrophobe Eigenschaften zu geben. Diese Anwendung kann auch in Kombination mit fluororganischen Polymerdispersionen erfolgen, z.B. wenn neben einer Wasser abweisenden Wirkung auch ein Öl und Schmutz abweisende Wirkung gewünscht ist, z.B. um eine Beschädigung des Bauwerkes durch Graffiti zu verhindern.

Bei dem erfindungsgemäßen Verfahren kann je nach Substrat und der beabsichtigten Wirkung die Anwendung der erfindungsgemäßen Dispersion konzentriert oder aber mit Wasser verdünnt erfolgen. Wenn die erfindungsgemäße Anwendung in verdünnter Form erfolgen soll, dann beträgt der Gehalt an Komponente (A) in der angewendeten Dispersion bevorzugt 2 bis 35 Gew.-%, insbesondere 5 bis 20 Gew.-%.

Das Verfahren zur Behandlung von Substraten hat den Vorteil, dass es effizient und kostengünstig ist und dass die Substrate langfristig vor dem Einfluss von Wasser geschützt sind.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim zusammengeben der Reaktanten bei Raumtemperatur ohne zusätzliche Heizung oder Kühlung einstellt, durchgeführt.

Zur Prüfung der Qualität und Stabilität wurden folgende Prüfungen der Emulsion durchgeführt :
Teilchengrößenmessung (D[4,3] = volumenmittlere Teilchengröße) wurde mit einem Malvern Mastersizer X (Malvern Instruments GmbH D-Herrenberg; Messprinzip: Fraunhofer Beugung entsprechend ISO 13320 durchgeführt.

Stabilität beim Zentrifugieren (1h bei 4000 Umdrehungen pro min, was einer Belastung mit der 2500-fachen Erdanziehung entspricht), visuelle Beurteilung von Wasser oder Ölabscheidungen bzw. dem Aufrahmen der Emulsion mit Abschätzung des prozentualen Anteils.

Stabilität bei der Wärmelagerung in einem geschlossenen Gefäß für 14 d bei 50°C, Messung der Teilchengröße und visuelle Beurteilung von Wasser oder Ölabscheidungen bzw. dem Aufrahmen der Emulsion mit Abschätzung des prozentualen Anteils und Bestimmung des molaren Anteils an Alkyltrialkoxysilan, bezogen auf die Summe des Siliziums in Silanen und Siloxanen im Vergleich zum Anteil vor der wärmelagerung durch quantitative ²⁹Si.-NMR-Analyse.

Me bedeutet im Folgenden den Methylrest.

### Beispiel 1

### Herstellung der Mischung aus Siloxane und hydrophoben Füllstoff (Dispersion A1)

100 Teile Polydimethylsiloxan mit Dimethylvinylendgruppen mit einer Viskosität von 1000 mPas und 95 Teile einer mit Hexadimethyldisilazan behandelten Kieselsäure mit einer BET-Oberfläche von 130 m²/g, einem Kohlenstoffgehalt von 2,1 % und einer Hydrophobie nach Methanoltitration von 62 wurden in einem Kneter vermischt, bis die Mischung homogen ist. Diese Mischung wurde im selben Kneter mit weiteren 100 Teilen Polydimethylsiloxan mit Vinyldimethylendgruppen mit einer Viskosität von 1000 mPas homogen vermischt. Die Mischung hatte eine Viskosität von 73000 mPas (Brookfield-Viskosimeter), Der Speichermodul bei 100/s und einer Amplitude von 1% war 590 Pa, die Fließgrenze betrug 9 Pa (gemessen nach DIN 54458).

### Beispiel 2

### Herstellung der Mischung aus Siloxan und hydrophilen Füllstoff mit in situ-Hydrophobierung (Dispersion A2)

100 Teile Polydimethylsiloxan mit Trimethylendgruppen und mit einer Viskosität von 1500 mPas und 70 Teile einer hydrophilen Kieselsäure mit einer BET-Oberfläche von 240 m²/g wurden in einem Kneter unter Stickstoffbeschleierung so lange vermischt, bis die Mischung homogen ist, Anschließend wurden 2,5 Teile Hexamethyldisilazan und 1 Teil Wasser eingemischt, und die Mischung wurde 2h auf 150°C erhitzt, auf 90°C abgekühlt, weitere 8 Teile Hexamethyldisilazan und 74 Teile Polydimethylsiloxan mit Trimethylendgruppen und mit einer Viskosität von 1500 mPas zugegeben, homogen vermischt und 4h erhitzt. Die so erhaltene Mischung hatte eine Viskosität von 98000 mPas (Brookfield-Viskosimeter). Der Speichermodul bei 100/s und einer Amplitude von 1% war 780 Pa, die Fließgrenze betrug 13 Pa (gemessen nach DIN 54458).

### Beispiel 3

Es wurden 0,75 Teile eines ethoxylierten Isotridecylalkohols mit 5 Ethylenglycolgruppen (HLB=11,2 erhältlich unter dem Namen Lutensol TO 5 bei der BASF SE D-Ludwigshafen) und 1,875 Teile einer 40%igen wässrigen Lösung eines ethoxyliertes Rizinusöls mit 200 Ethylenglycolgruppen (HLB=18,1, erhältlich unter dem Namen Atlas G1300 bei der Croda GmbH D-Nettetal) vermischt Zu dieser Mischung wurden innerhalb von 3 min 32 Teile Isocatyltriethoxysilan sowie 0,2 Teile Aminopropyltriethoxysilan zugegeben und weitere 3 min mit einem Ultra-Turrax^{®} T 50 (IKA^{®}-Werke GmbH & Co, KG, D-Staufen) bei 4000 U/min vermischt, Innerhalb von 2 min wurden 15 Teile der Dispersion A1 hinzugefügt und weitere zwei Minuten homogenisiert. Die Emulsion wurde mit 45 Teilen gereinigtem Wasser verdünnt, es wurden 0,63 Teile Cetyltrimethylammoniumchlorid (erhältlich unter dem Namen Genamin CTAC bei der Clariant GmbH) und mit 0,2 Teilen Acticide BX (N) (Konservierungsmittel von der Thor Chemie GmbH Speyer) konserviert. Dieser Emulsion werden noch 4 Teile einer 50%igen wässrigen Emulsion eines Aminogruppen enthaltenden Polydimethylsiloxans mit einer Viskosität von 500 mPas und einer Aminzahl von 0,15 meq/g (erhältlich unter der Bezeichnung SILRES® BS 1306 bei der Wacker Chemie AG, D-München) zugesetzt. Die Teilchengröße (Mittelwert der Volumenverteilung) dieser mit Wasser verdünnbaren Öl in Wasser Emulsion betrug 7,0 µm. Die Emulsion wird mit einem Hochdruckhomogenisator (APV 2000, Invensys APV Unna) bei 500 bar homogenisiert. Es wird eine dünnflüssige Emulsion erhalten, die eine volumenmittlere Teilchengröße von 0, 91 µm aufweist.

Die so erhaltene Emulsion wurde untersucht, die Ergebnisse finden sich in Tabelle 1.

### Beispiel 4

Es wurden 0,75 Teile eines ethoxylierten Isotridecylalkohols mit 5 Ethylenglycolgruppen und einem HLB-Wert von 11,2 (käuflich erhältlich unter dem Namen Lutensol TO 5 bei der BASF SE, D-Ludwigshafen) und 1,875 Teile einer 40%igen wässrigen Lösung eines ethoxylierten Rizinusöls mit 200 Ethylenglycolgruppen (HLB=18,1, erhältlich unter dem Namen Atlas G1300 bei der Croda GmbH D-Nettetal) vermischt, Zu dieser Mischung wurden innerhalb von 3 min 30 Teile Isooctyltriethoxysilan, 7 Teile eines Methylsiliconbarzes, das aus 90 mol% MeSiO_{3/2}-Einheiten und 1.0 mol% Me₂SiO_{2/2}-Einheiten besteht, mit einer gewichtsmittleren Molmasse Mw von 6700 g/mol einer Viskosität von 3380 mPas und einem Gehalt an Ethoxygruppen von 3,1 Gew.-% und an Hydroxygruppen von 0,57 Gew.% sowie 0,2 Teile Aminopropyltriethoxysilan zugegeben und weitere 3 min mit einem Ultra-Turrax^{®} T 50 (IKA^{®}-Werke GmbH & Co.KG, D-Staufen) bei 4000 U/min vermischt. Innerhalb von 2 min wurden 10 Teile der Dispersion A2 hinzugefügt und weitere zwei Minuten homogenisiert. Diese Emulsion wurde mit 46 Teilen gereinigtem Wasser verdünnt und mit 0,2 Teilen eines Konservierungsmittels (erhältlich unter der Bezeichnung Acticide BX (N) von der Thor Chemie GmbH D-Speyer) konserviert. Dieser Emulsion werden noch 4 Teile einer 50%igen wässriger Emulsion eines Aminogruppen enthaltenden Polydimethylsiloxans mit einer Viskosität von 500 mPas und einer Aminzahl von 0,15 meq/g (erhältlich unter der Bezeichnung STLRES® BS 1306 bei der Wacker Chemie AG, D-München) zugesetzt. Die Teilchengröße (Mittelwert der Volumenverteilung) dieser mit Wasser verdünnbaren Öl in Wasser Emulsion betrug 5,2 µm, Die Emulsion wird mit einem Hochdruckhomogenisator (APV 2000, Invensys APV D-Unna) bei 500 bar homogenisiert. Es wird eine dünnflüssige Emulsion erhalten, die eine volumenmittlere Teilchengröße von 0,92 µm aufweist.

Die so erhaltene Emulsion wurde untersucht, die Ergebnisse finden sich in Tabelle 1.

### Beispiel 5

Das in Beispiel 3 beschriebene Verfahren wird wiederholt, mit der Abänderung, dass kein Cetyltrimethylammoniumchlorid zugegeben wird. Vor dem Hochdruckhomogenisieren hatte die Emulsion eine volumenmittlere Teilchengröße von 4,2 µm, danach von 1,13 µm.

Die so erhaltene Emulsion wurde untersucht, die Ergebnisse finden sich in Tabelle 1.

### Beispiel 6

Es wurden 26 kg eines ethoxylierten Isotridecylalkohols mit 5 Ethylenglycolgruppen und einem HLB-Wert von 11,2 (käuflich erhältliCh unter dem Namen Lutensol TO 5 bei der BASF SE, D-Ludwigshafen) und 48 kg einer 50%igen wässrigen Lösung eines ethoxyliertes Rizinusöls mit 200 Ethylenglycolgruppen (HLB=18,1, erhältlich unter dem Namen Atlas G1300 bei der Croda GmbH D-Nettetal) vermischt. Zu dieser Mischung wurden innerhalb von 10 min 1050 kg Isooctyltriethoxysilan, sowie 6,4 kg Aminopropyltriethoxysilan zugegeben und weitere 10 min mit einem 3,5 m³ Rührwerk mit Rotor-Stator Homogenisator der Fa. Ekato-Unimix vermischt. Innerhalb von 20 min wurden 480 kg der Dispersion A1 hinzugefügt und weitere 20 Minuten homogenisiert. Diese Emulsion wurde stufenweise mit 1326 kg gereinigtem Wasser verdünnt. Es wurden 67 kg 30%ige Cetyltrimethylammoniumchloridlösung (erhältlich unter dem Namen Genamin CTAC bei der Clariant GmbH) und 5 kg eines Konservierungsmittels (erhältlich unter der Bezeichnung Acticide BX (N) von der Thor Chemie GmbH D-Speyer) zugegeben, Dieser Emulsion werden noch 191 kg einer 50%igen wässrigen Emulsion eines Aminogruppen enthaltenden Polydimethylsiloxans mit einer Viskosität von 500 mPas und einer Aminzahl von 0,15 meq/g (erhältlich unter der Bezeichnung SILRES® BS 1306 bei der Wacker Chemie AG, D-München) zugesetzt. Die Teilchengröße (Mittelwert der Volumenverteilung) dieser mit Wasser verdünnbaren öl in Wasser Emulsion betrug 4,71 µm. Die Emulsion wurde in einen gerührten Tank überführt und anschließend mit einem Hochdruckhomogenisator (APV Gaulin GmbH Typ 264 MC 15-10TBS) bei 250 bar homogenisiert und dabei in einen zweiten Tank überführt. Es wird eine dünnflüssige Emulsion erhalten, die eine volumenmittlere Teilchengröße von 1,07 µm aufweist.

Die so erhaltene Emulsion wurde untersucht, die Ergebnisse finden sich in Tabelle 1.

**Tabelle 1;**

| Beispiel | D [4, 3] in µm | D [4, 3] in µm nach Wärmelagerung | Abscheidungen beim Zentrifugieren | Abscheidungen nach Wärmelagerung | Alkyltrialkoxysilan nach Wärmelagerung |
|---|---|---|---|---|---|
| 3 | 0,91 | 0,99 | 5% | 2% | 98% |
| 4 | 0,92 | 0,98 | 6% | < 1% | 100% |
| 5 | 1,13 | 1,18 | 6% | 1% | 99% |
| 6 | 1,00 | 1,07 | 6% | 1% | 100% |

### Vergleichsbeisplel 1

Das in Beispiel 6 beschriebene Verfahren wird wiederholt, mit der Abänderung, dass anstelle von 480 kg der Mischung A1 320 kg Polydimethylsiloxan mit Trimethylsilylendgruppen mit einer Viskosität von 1000 mPas und 160 kg einer mit Hexadimethyldisilazan behandelten Kieselsäure mit einer BET-Oberfläche von 130 m²/g, einem Kohlenstoffgehalt von 2,1 % und einer Hydrophobie nach Methanoltitration von 62 nacheinander zugegeben und gemeinsam mit dem Silan vermischt wird. Vor der Hochdruckhomogenisierung war keine Teilchengröße messbar, da die Emulsion sich nicht homogen mit Wasser verdünnen ließ. Die Emulsion trennte sich trotz beständigen Rührens bereits im ersten Lagertank und zeigte auch nach der versuchten Homogenisierung mit dem Hochdruckhomogenisator ein inhomogenes Erscheinungsbild. Weitere Tests waren deshalb nicht möglich.

### Beispiel 7 Anwendungstechnishe Prüfung

Die Dispersionen gemäß den Beispielen 1 bis 3 wurden zur Tmprägnierung von Mörtelscheiben verwendet. Zur Herstellung der Mörtelscheiben wurden 2700 g Normensand (Fa. Normensand GmbH, D-59269 Beckum bei Münster), 900 g Weißzement PZ 450 Z (Fa. Dyckerhoff Zementwerke AG, D-65203 Wiesbaden) und 450 g Leitungswasser vermischt. Anschließend wird die Mischung in Kunststoffringe (Durchmesser 8,5 cm, Höhe 2 cm) gegossen, die sich auf einer Kunststoffolie befinden. Zur Verdichtung und Entfernung von Lufteinschlüssen wird mit einer Spachtel öfters in die Masse gestoßen, abschließend mit der Spachtel der Überstand der Betonmischung entfernt. Die Proben werden mit einer Folie abgedeckt und an den Kanten gesäubert. Bis zum Einsatz müssen die Prüfkörper mindestens 3 Monate im Normklima (23°C, 50 % rel. Luftfeuchtigkeit) gelagert werden. Unmittelbar vor der Verwendung wird die Oberseite der Proben zur Entfernung der Zementsunterschicht sandgestrahlt.

Diese so erhaltenen Mörtelscheiben werden vor der Imprägnierung 2 Minuten in entionisiertes Wasser getaucht und 12 Stunden lang in Folie verpackt bei Raumtemperatur gelagert. Anschließens werden sie 2 Stunden unverpackt im Normklima (23/50) gelagert und nach Feststellung des Ausgangsgewichtes (W1) imprägniert. Dies geschieht so, dass die Prüfkörper für 1 Minute in die erfindungsgemäße Dispersion getaucht werden (Flüssigkeitsüberstand ca. 5 cm). Dabei werden die Dispersionen nach Beispiel 3 und 4 konzentriert eingesetzt, die Dispersionen nach Beispiel 5 werden 1: 4 mit Wasser verdünnt zum Imprägnieren verwendet. Jetzt wird erneut gewogen (W2) und aus der Differenz (W2-W1) die Imprägniermittelaufnahme bestimmt. Zur Ausbildung der hydrophoben Wirkung werden die Proben 14 Tage im Normklima (23/50) gelagert. Nun werden die Prüfkörper erneut gewogen (W5) und für 24h in entionisiertes Wasser gelegt (5 cm Wasserüberstand). Die Wasseraufnahme wird durch Wägungen (W6) bestimmt und die prozentuale Wasseraufnahme berechnet sich nach (W6-W5)/W5 x 100.

Der Abperleffekt wurde visuell beurteilt, nachdem der Probekörper mit Wasser besprüht wurde, dabei wird eine Skala von 1-5 benutzt;
1 = sehr gut, d. h. keine Benetzung der Baustoffoberfläche mit Wasser bzw. es bleiben keine Wassertropfen an der Baustoffoberfläche hängen
2 = gut, d. h. ebenfalls keine Benetzung, Wassertropfen bleiben vereinzelt hängen, lassen sich jedoch durch Abschütteln einfach entfernen
3 = benetzt leicht, d. h. abperlende Tropfen benetzen die Baustoffoberfläche leicht
4 = benetzt stark, d. h. es bilden sich fast keine abperlenden Tropfen mehr aus
5 = benetzt vollständig wie unbehandelter Probekörper

Die Ergebnisse (Mittelwerte von jeweils 3 Mörtelscheiben) sind in Tabelle 2 dargestellt:

**Tabelle 2 ; Anwendungstechnische Prüfungen**

| Beispiel | Wasseraufnahme in % | Abperleffekt |
|---|---|---|
| 3 | 0,60 | 1 |
| 4 | 0,68 | 2 |
| 5 | 0,66 | 1 |
| 6 | 0,67 | 2 |
| unbehandelt | 5,59 | 5 |

## Patentansprüche

1. Wässrige Dispersionen von Organosiliciumverbindungen herstellbar unter Verwendung von
(A) einer Mischung im Wesentlichen bestehend aus anorganischem Füllstoff (B) und Siloxan (C) enthaltend Einheiten der Formel
Rₐ(R¹O)SiO_{(4-a-b)/2} (I),
worin
R gleich oder verschieden sein kann und Wasserstoffatom oder einen einwertigen, SiC-gebundenen, gegebenenfalls substituierten Kohlenwasserstoffrest bedeutet,
R¹ Wasserstoffatom bedeutet,
a 0, 1, 2 oder 3 ist und
b 0, 1., 2 oder 3 ist, mit der Maßgabe, dass die Summe aus a und b kleiner oder gleich 3 ist, mit einer Viskosität bei 25°C von 5 bis 1 000 000 mPas,
wobei die Mischung (A) eine Viskosität von 10 bis 10 000 000 mPas bei 25°C aufweist und es sich bei Füllstoff (B) um Kieselsäuren handelt,
(D) Silanen der Formel
R³_{c}R²_{d}Si(OR⁴)_{a-c-d} (II),
worin
R² gleich oder verschieden sein kann und einwertige, sic-gebundene, gegebenenfalls substituierte Kohlenwasserstoffreste mit 1 bis 3 Kohlenstoffatomen bedeutet,
R³ gleich oder verschieden sein kann und einwertige, Sic-gebundene, gegebenenfalls substituierte Kohlenwasserstoffreste mit mindestens 4 Kohlenstoffatomen, die mit Heteroatomen und/oder Carbonylgruppen unterbrochen sein können, bedeutet,
R⁴ gleich oder verschieden sein kann und einwertige, gegebenenfalls substituierte Kohlenwasserstoffreste oder Wasserstoff bedeutet,
c 1, 2 oder 3 ist und
d 0, 1 oder 2 ist, mit der Maßgabe, dass die summe aus c und d 1, 2 oder 3 ist,
und/oder deren Teilhydrolysaten,
gegebenenfalls
(E) Organopolyxiloxanen,
(F) Emulgator,
(G) Wasser und
gegebenenfalls
(H) weiteren Stoffen.

2. Wässrige Dispersionen gemäß Anspruch 1, **dadurch gekennzeichnet, dass** Mischung (A) Füllstoff (B) in Mengen von 1 bis 60 Gewichtsteilen enthält, bezogen auf 100 Gewichtsteile Mischung (A).

3. Wässrige Dispersionen gemäß einem oder mehreren der Ansprüche 1 bis 2, **dadurch gekennzeichnet, dass** sie Mischung (A) in Mengen von 2 bis 40 Gew.-% enthalten, bezogen auf die Gesamtmenge der Dispersion.

4. Verfahren zur Herstellung wässriger Dispersionen von organosiliciumverbindungen gemäß einem oder mehreren der Ansprüche 1 bis 3, bei dem Mischung (A) hergestellt durch Vermischen von anorganischem Füllstoff (B) und Siloxan (C) enthaltend Einheiten der Formel (I) mit einer Viskosität bei 25°C von 5 bis 1 000 000 mPas, wobei die Mischung (A) eine Viskosität von 10 bis 10 000 000 mPas bei 25°C aufweist, mit
(D) Silanen der Formel (II) und/oder deren Teilhydrolysaten, gegebenenfalls
(E) Organopolysiloxanen,
(F) Emulgator,
(G) Wasser und
gegebenenfalls
(H) weiteren Stoffen
vermischt wird.

5. Verfahren nach Anspruch 4, **dadurch gekennzeichnet, dass** Komponenten (F) und ein Teil der Komponente (G) vorgelegt, nacheinander oder gemeinsam Komponenten (A), (D), ggf. (E) und ggf. (H) zugegeben und homogen vermischt werden und anschließend die restlichen Mengen an Komponenten (G) zugegeben, vermischt und homogenisiert werden.

## Claims

1. Aqueous dispersions of organosilicon compounds, producible using
(A) a mixture consisting essentially of inorganic filler (B) and siloxane (C) containing units of the formula
Rₐ(R¹O)_{b}SiO_{(4-a-b)/2} (I)
in which
R may be the same or different and is a hydrogen atom or a monovalent, SiC-bonded, optionally substituted hydrocarbyl radical,
R¹ is a hydrogen atom,
a is 0, 1, 2 or 3 and
b is 0, 1, 2 or 3, with the proviso that the sum of a and b is less than or equal to 3, having a viscosity at 25°C of 5 to 1 000 000 mPas,
the mixture (A) having a viscosity of 10 to 10 000 000 mPas at 25°C, and filler (B) comprising silicas,
(D) silanes of the formula
R³_{c}R²_{d}Si (OR⁴)_{4-c-d} (II)
in which
R² may be the same or different and denotes monovalent, SiC-bonded, optionally substituted hydrocarbyl radicals having 1 to 3 carbon atoms,
R³ may be the same or different and denotes monovalent, SiC-bonded, optionally substituted hydrocarbyl radicals having at least 4 carbon atoms, which may be interrupted by heteroatoms and/or carbonyl groups,
R⁴ may be the same or different and denotes monovalent, optionally substituted hydrocarbyl radicals or hydrogen,
c is 1, 2 or 3 and
d is 0, 1 or 2, with the proviso that the sum of c and d is 1, 2 or 3,
and/or partial hydrolysates thereof,
optionally
(E) organopolysiloxanes,
(F) emulsifier,
(G) water and
optionally
(H) further substances.

2. Aqueous dispersion according to Claim 1, **characterized in that** mixture (A) comprises filler (B) in amounts of 1 to 60 parts by weight, based on 100 parts by weight of mixture (A).

3. Aqueous dispersions according to one or more of Claims 1 and 2, **characterized in that** they comprise mixture (A) in amounts of 2 to 40% by weight, based on the total amount of the dispersion.

4. Process for producing aqueous dispersions of organosilicon compounds according to one or more of Claims 1 to 3, in which mixture (A) produced by mixing inorganic filler (B) and siloxane (C) containing units of the formula (I) having a viscosity at 25°C of 5 to 1 000 000 mPas, mixture (A) having a viscosity of 10 to 10 000 000 mPas at 25°C, is mixed with
(D) silanes of the formula (II) and/or partial hydrolysates thereof,
optionally
(E) organopolysiloxanes,
(F) emulsifier,
(G) water and
optionally
(H) further substances.

5. Process according to Claim 4, **characterized in that** components (F) and a portion of component (G) are initially charged, components (A), (D), optionally (E) and optionally (H) are added successively or together and mixed homogeneously, and then the residual amounts of components (G) are added, mixed and homogenized.

## Revendications

1. Dispersions aqueuses de composés organosiliciés pouvant être préparées en utilisant
(A) un mélange essentiellement constitué d'une charge inorganique (B) et d'un siloxane (C) contenant des unités de formule
Rₐ(R¹O)_{b}SiO_{(4-a-b)/2} (I)
où
R peut être identique ou différent et signifie un atome d'hydrogène ou un radical hydrocarboné monovalent, lié par SiC, le cas échéant substitué,
R¹ signifie un atome d'hydrogène,
a vaut 0, 1, 2 ou 3 et
b vaut 0, 1, 2 ou 3,
à condition que la somme de a + b soit inférieure ou égale à 3, présentant une viscosité à 25°C de 5 à 1 000 000 mPa.s,
le mélange (A) présentant une viscosité de 10 à 10 000 000 mPa.s à 25°C et s'agissant pour la charge (B) de silices,
(D) des silanes de formule
R³_{c}R²_{d}Si(OR⁴)_{4-c-d} (II)
où
R² peut être identique ou différent et signifie des radicaux hydrocarbonés monovalents, liés par SiC, le cas échéant substitués, comprenant 1 à 3 atomes de carbone,
R³ peut être identique ou différent et signifie des radicaux hydrocarbonés monovalents, liés par SiC, le cas échéant substitués, comprenant au moins 4 atomes de carbone, qui peuvent être interrompus par des hétéroatomes et/ou des groupes carbonyle,
R⁴ peut être identique ou différent et signifie des radicaux hydrocarbonés monovalents, le cas échéant substitués, ou hydrogène,
c vaut 1, 2 ou 3 et
d vaut 0, 1 ou 2,
à condition que la somme de c et d vaut 1, 2 ou 3, et/ou leurs hydrolysats partiels, le cas échéant
(E) des organopolysiloxanes,
(F) un émulsifiant,
(G) de l'eau et le cas échéant
(H) d'autres substances.

2. Dispersions aqueuses selon la revendication 1, **caractérisées en ce que** le mélange (A) contient la charge (B) en des quantités de 1 à 60 parties en poids, par rapport à 100 parties en poids de mélange (A).

3. Dispersions aqueuses selon l'une ou plusieurs des revendications 1 à 2, **caractérisées en ce qu'**elles contiennent le mélange (A) en des quantités de 2 à 40% en poids, par rapport à la quantité totale de la dispersion.

4. Procédé pour la préparation de dispersions aqueuses de composés organosiliciés selon l'une ou plusieurs des revendications 1 à 3, dans lequel le mélange (A), préparé par mélange de la charge inorganique (B) et du siloxane (C) contenant des unités de formule (I), présentant une viscosité à 25 ° C de 5 à 1 000 000 mPa.s, le mélange (A) présentant une viscosité de 10 à 10 000 000 mPa.s à 25°C, est mélangé avec
(D) des silanes de formule (II) et/ou leurs hydrolysats partiels, le cas échéant
(E) des organopolysiloxanes,
(F) un émulsifiant,
(G) de l'eau et le cas échéant
(H) d'autres substances.

5. Procédé selon la revendication 4, **caractérisé en ce que** le composant (F) et une partie du composant (G) sont disposés au préalable, les composants (A), (D), le cas échéant (E) et le cas échéant (H) sont ajoutés consécutivement ou ensemble et mélangés de manière homogène, puis les quantités résiduelles de composant (G) sont ajoutées, mélangées et homogénéisées.
